# EUROPÄISCHE PATENTSCHRIFT

(11) **EP 2 417 852 B1**
(45) Veröffentlichungstag und Bekanntmachung des Hinweises auf die Patenterteilung: **05.10.2016**
(21) Anmeldenummer: 11006340.1
(22) Anmeldetag: 02.08.2011
(51) Int. Cl.: B01D 29/11, B01D 29/70, C02F 9/00, A01K 63/04

(54) **Filtervorrichtung**
Filter device
Dispositif de filtre

(30) Priorität: 11.08.2010 DE 202010011286 U
(43) Veröffentlichungstag der Anmeldung: 15.02.2012
(73) Patentinhaber: OASE GmbH, 48477 Hörstel-Riesenbeck (DE)
(72) Erfinder: Schröter, Frank, 49479 Ibbenbüren (DE)
(74) Vertreter: Wischmeyer, André

(56) Entgegenhaltungen:
- EP-A1- 0 774 288
- EP-A1- 2 161 064
- WO-A1-02/081051
- CN-A- 101 590 343

## Beschreibung

Die vorliegende Erfindung betrifft eine Filtervorrichtung für Gartenteiche mit einem Gehäuse, einem Wassereinlass, einem Wasserauslass und wenigstens einem mittels einer Betätigungsvorrichtung im Gehäuse komprimierbaren Filter, welcher im Strömungsweg zwischen Wasserein- und Wasserauslass angeordnet ist und zumindest jeweils eine Wasseranström- und Wasserabströmoberfläche aufweist.

Eine Filtervorrichtung ist aus der EP 1 420 869 B1 bekannt. Hierbei liegt der Filter an einem das Filtermedium abstützenden zentralen Strömungskanal an. Das zu reinigende Teichwasser tritt über eine Wasseranströmoberfläche, die in diesem Fall durch die Zylindermantelfläche des zumindest einen Filters gebildet wird, in den Filter ein. Die Wand des zentralen Strömungskanals weist Perforationen auf, durch die das gefilterte Wasser aus der Wasserabströmoberfläche des Filters in den zentralen Strömungskanal austreten kann. Die gattungsgemäße Vorrichtung baut aufgrund des benötigen zentralen Strömungskanals vergleichsweise groß.

Ein Gegenstand nach dem Oberbegriff des Anspruchs 1 ist aus EP 2 161 064 A1 bekannt.

Es ist Aufgabe der vorliegenden Erfindung, einen Gegenstand nach dem Oberbegriff des Anspruchs 1 kompakter auszubilden.

Die Aufgabe wird gelöst durch einen Gegenstand mit den Merkmalen des Anspruchs 1. Vorteilhafte Ausgestaltungen sind den Unteransprüchen sowie der nachfolgenden Beschreibung zu entnehmen.

Erfindungsgemäß ist vorgesehen, dass die Wasserabströmoberfläche eine Mehrzahl von Kanälen ausbildet, in denen Wasser oder ein anderes zu reinigendes Medium in Richtung des Wasserauslasses transportierbar ist. Anstelle eines baulich getrennten zentralen Strömungskanals, der von dem Filter abgegrenzt ist, bildet dieses selbst den Strömungskanal aus, in dem Wasser in Richtung des Wasserauslasses transportiert wird. Neben der hiermit einhergehenden Platzersparnis aufgrund des Verzichtes auf die im Stand der Technik bekannte Ausbildung des zentralen Strömungskanals werden zusätzlich bessere Reinigungsraten und Transferleistungen erzielt, da die Wasserabströmoberfläche die mit der Ausbildung der Kanäle einhergehende Oberflächenvergrößerung aufweist. Unter einem Kanal ist hierbei eine im Vergleich zu der mikroskopischen Porenstruktur des Filters makroskopische Struktur zu verstehen, d.h. der Kanal ist insbesondere über die den Kanal ausbildende Oberfläche des Filters mit Wasser befüllbar.

Die erfindungsgemäße Filtervorrichtung weist eine Mehrzahl von Kanälen auf. Diese können parallel entlang einer vertikalen Längsmittelachse angeordnet sein. Alternativ oder ergänzend können die Kanäle zur Ausbildung einer komplexeren Kanalstruktur auch miteinander verbunden sein. Im Querschnitt kann ein solcher Kanal eckig ausgebildet sein. Er kann jedoch auch teilweise gerundet ausgebildet sein, was insbesondere bei einem zumindest teilweise komplett durch das Filtermaterial hindurch verlaufenden Kanal vorteilhaft ist.

Der Filter weist eine zentrale Ausnehmung auf, wobei die Wasserabströmoberfläche die zur Ausnehmung weisende Seite des Filters ausbildet. In der erfindungsgemäßen Vorrichtung wird das zu reinigende Medium, insbesondere Teich- oder Aquarienwasser, von außen an den in einer Grundform im Wesentlichen hohlzylinderförmigen Filter herangeführt und durchdringt diesen von der äußeren, größeren Oberfläche her nach innen. Nach innen hin verringert sich dann der vom Wasser zu durchquerende Querschnitts des Filtermaterials, was jedoch teilweise durch den zumindest einen von der Wasserabströmoberfläche ausgebildeten und einer Oberflächenvergrößerung dienenden Kanal wieder aufgehoben wird.

Zur weiteren Vergrößerung der Wasseranströmoberfläche kann auf der in Strömungsrichtung betrachtet zum Wassereinlass hin liegenden Oberfläche ebenfalls eine Profilierung oder die Ausbildung von Kanälen realisiert sein. Die Vergrößerungen der Oberfläche durch eine Profilierung dienen der guten Ausnutzung des für den Filter zur Verfügung stehenden Bauraums.

Die von dem Filter ausgebildeten Kanäle können zumindest teilweise innerhalb des Filters verlaufen und beispielsweise in der Nähe des Wasserauslasses oder eines Eingangs zu einem weiteren Filter, beispielsweise einem Strahlungsfilter, an einer äußeren Oberfläche des Filters münden. Eine noch bessere Ausnutzung des vorhandenen Filtermaterials lässt sich jedoch dadurch erreichen, dass die Kanäle durch eine an dem Filter anliegende Wand, d.h. eine weitere Wand des Filtergehäuses oder Filtervorrichtung mit ausgebildet werden.

Hierbei bildet der Filter vorzugsweise keine toten Enden mit Filtermaterial aus, d.h. das das Wasser zumindest seitlich ausweichen kann, falls das Filtermaterial an einer Wand anlegt. Erfindungsgemäß handelt es sich bei der den Filter begrenzenden Wand um die Außenseite eines in etwa den Grundriss zylindrischen d.h. in Umfangsrichtung geschlossenen Wandungsteils, in dem ein weiteres Filterelement angeordnet sein kann. Vorzugsweise verlaufen dann die Kanäle des Filters in axialer Richtung des zentralen Filterelements, bei dem es sich beispielsweise um eine UVC-Strahlungsfiltervorrichtung handeln kann. Diese weist insbesondere einen im Bereich des Bodens angeordneten Einsatzschlitz auf, so dass das gefilterte Material durch die Strömungskanäle des Filtermediums nach unten geleitet wird und von dort dann wieder durch die Strahlungsfiltervorrichtung aufsteigen kann. Der vorhandene Bauraum ist so optimal ausgenutzt. Die Filtervorrichtung baut extrem kompakt durch die Abfolge von Wassereinlass, im wesentlichen hohlzylindrisch ausgebildeten Filter mit einem unteren Wassereinlass in eine zentrale Strahlungsfilteranordnung, in der dann der Wasserauslass ebenfalls aus im oberen Bereich der Strahlungsfiltervorrichtung nachgeschaltet ist.

Die Betätigungsvorrichtung zum Komprimieren des Filters kann über hydraulische oder elektromotorisch betriebene Antriebsmittel verfügen, mit denen der Filter komprimiert werden kann. Eine besonders kostengünstige Variante der Erfindung weist jedoch ein manuell zu betätigendes Betätigungsmittel. Hierzu ist der Filter, der beispielsweise mehrere miteinander verbundene Filterschäume umfasst, zwischen zwei Flächen angeordnet, von denen zumindest eine mit einem zugehörigen Vorrichtungsteil, vorzugsweise einer Druckplatte, in Richtung der anderen bewegt, insbesondere gezogen oder gedrückt werden kann. Hierfür ist ein Betätigungsmittel in Form einer Zug- oder Druckstange vorteilhaft, welche manuell bewegbar ist und über die das über seine (Ober-)Fläche einen Druck auf den Filter ausübende Vorrichtungsteil angeordnet ist.

Zur möglichst kontrollierten Kompression des Filters ist im äußeren Randbereich des Filters eine Ausnehmung vorhanden, durch die das Betätigungsmittel hindurchgreifen kann. Während der Kompression des Filters und der anschließenden Dekompression wird der Filter somit zusätzlich geführt. Ein Verklemmen oder Verkleben eines noch verschmutzten Filters kann so verbessert vermieden werden. Die zur Kompression des Filters benötigte Kraft kann über mehrere Betätigungsmittel in Form von Stangen auf beispielsweise die unterhalb des Filters angeordnete Druckplatte übertragen werden. So kann der Filter auch über mehrere in Ausnehmungen angeordnete Betätigungsmittel geführt werden. Es hat sich jedoch gezeigt, dass bereits die Verwendung einer einzigen Zug-/Druckstange die gewünschte Funktionalität gewährleistet. Dadurch steht für das Filtermaterial selbst wieder mehr Bauraum zur Verfügung bzw. der Filter kann noch kompakter gebaut werden.

Die erfindungsgemäße Filtervorrichtung zeichnet sich in einer weiteren Ausbildung dadurch aus, dass der Filter durch seine Komprimierung zumindest teilweise aus dem Strömungsweg entfernbar ist, dergestalt, dass ein im Strömungsweg vor dem unkomprimierten Filter befindlicher Bereich und ein im Strömungsweg nach dem unkomprimierten Filter befindlicher Bereich über den vom komprimierten Filter freigegebenen Bereich miteinander verbunden sind. Die Verbindung wird somit durch den vom Filter im komprimierten Zustand freigegebenen Bereich bewirkt. Die Spülung der Filtervorrichtung ist aufgrund des vom Filter nicht mehr oder deutlich weniger behinderten Strömungsweges leichter und mit höheren Durchflüssen durchführbar.

Besonders vorteilhaft ist des Weiteren der Austausch von Wassereinlass und Wasserauslass, wodurch das in die Filtervorrichtung eingeführte Wasser in Richtung des sonst als Wassereinlass dienenden Bereiches gepumpt wird und den zwischen Filter und Wassereinlass liegenden Bereich säubert. Anstelle eines Vertauschens der Wasseranschlüsse wird dieses Vertauschen bevorzugt durch ein zwischen Wassereinlass und Wasserauslass angeordnetes Mehrwege-Ventil ermöglicht.

Vorzugsweise sind die Seitenwände der Kanäle, die durch das Filtermedium ausgebildet werden, leicht hinterschnitten ausgebildet. Die Kanäle verbreitern sich somit von einer zentralen Längsachse hin nach außen und weisen im Filtermedium eine größere Oberfläche auf. Dies ist wiederum vorteilhaft für die Menge zu filternden Wassers.

Weitere Vorteilung und Einzelheiten der Erfindung lassen sich der nachfolgenden Figurenbeschreibung entnehmen. In den Figuren zeigt:
- Fig. 1: eine perspektivische Ansicht eines erfindungsgemäßen Gegenstands,
- Fig. 2: einen Vertikalschnitt durch den Gegenstand gemäß Fig. 1,
- Fig. 3: einen Teil des Gegenstandes nach Fig. 1
- Fig. 4: einen um 90° um eine vertikale Längsachse verdrehten Vertikalschnitts des Gegenstands nach Fig. 1,
- Fig. 5: den Gegenstand nach Fig. 4 in einer Betätigungsstellung.

Gleich oder ähnlich wirkende Teile sind - sofern dienlich - mit identischen Bezugsziffern versehen. Einzelne technische Merkmale der nachfolgend beschriebenen Ausführungsbeispiele können auch mit den Merkmalen der vorbeschriebenen Ausführungsbeispiele zur erfindungsgemäßen Weiterbildungen fügen.

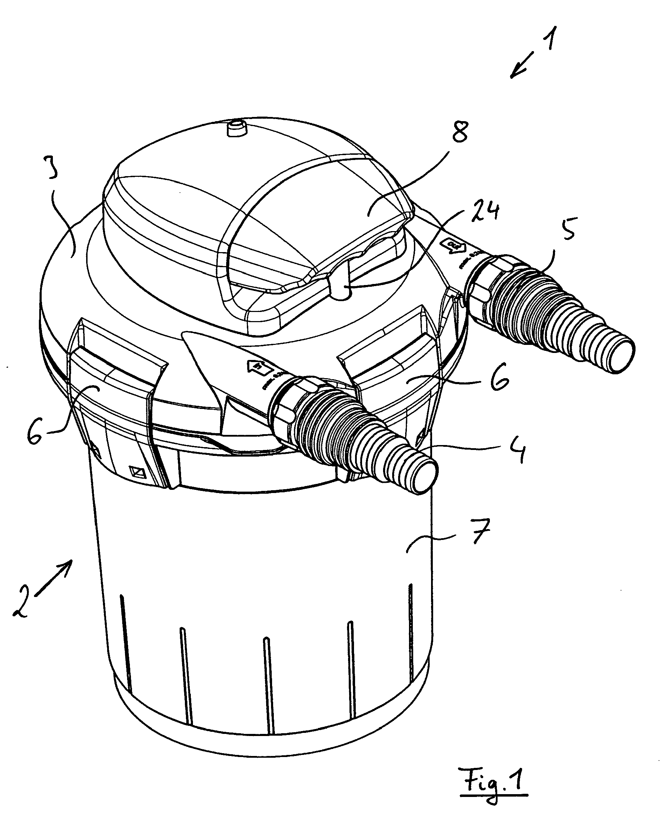

Fig. 1 zeigt eine erfindungsgemäße Vorrichtung 1 als Teich- oder Aquarienfilter. Ein mit einem Deckel 3 versehenes Gehäuse 2 weist einen Wassereinlass 4 und einen Wasserauslass 5 auf. Diese Ein- bzw. Auslässe sind platzsparend im über ein Rastelement 6 mit dem Unterteil 7 verbundenen Deckel 3 angeordnet. Die erfindungsgemäße Filtervorrichtung 1 weist eine manuell über einen Griff 8 betätigbare Betätigungsvorrichtung auf. Das Herausziehen des Griffs 8 und der damit verbundenen Zugstange 24 aus dem Deckel 3 führt zu der nachfolgend noch beschriebenen Kompression des Filters.

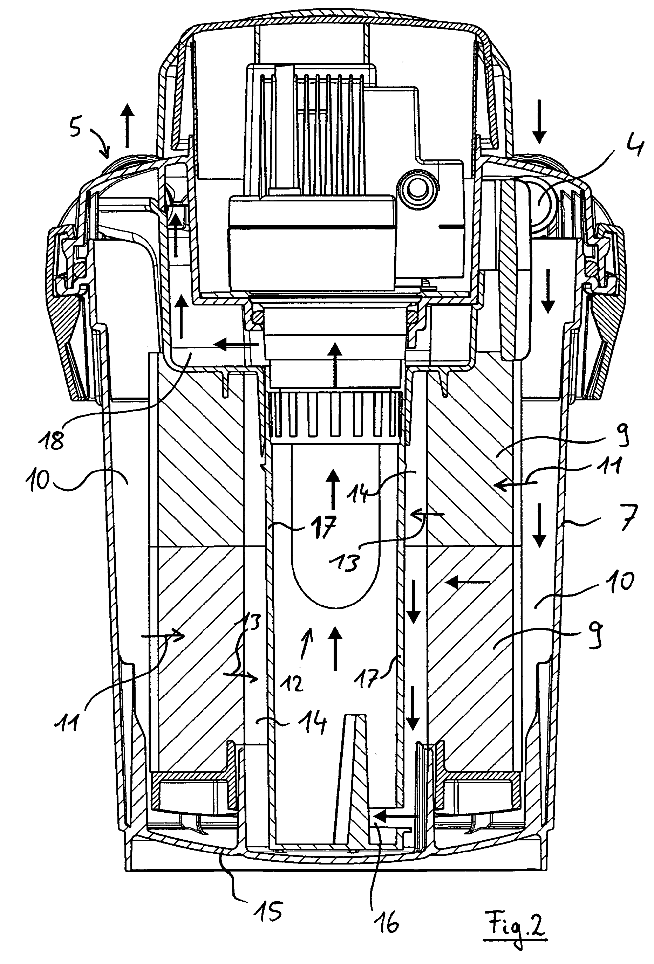

Fig. 2 zeigt veranschaulicht den Weg, den das zu reinigende/gereinigte Wasser durch die Filtervorrichtung nimmt. Der Strömungsweg ist über eine Reihe von Pfeilen kenntlich gemacht. Nach dem Eintritt des zu reinigenden Wassers durch den Wassereinlass 4 verteilt sich das Wasser in einen um den durch Filterelemente 9 gebildeten Filter herum vorhandenen Freiraum 10. Der Freiraum 10 ist der nach außen hin durch eine Wand des Unterteils 7 begrenzt. Das Wasser ist von einer Pumpe druckbeaufschlagt, die Teil der Filtervorrichtung sein kann, in diesem Fall jedoch außerhalb der Filtervorrichtung angeordnet ist. Pfeile 11 veranschaulichen, dass das Wasser aus dem Freiraum 10 in das Filtermaterial eintritt. Die zum Raum 10 zugewandte Seite stellt somit die Wasseranströmoberfläche des Filters dar. Zum Inneren hin tritt das dann zum ersten Mal gereinigte Wasser aus den Filterelementen in parallel zu einer vertikalen Längsachse der Vorrichtung verlaufende Kanäle 14 aus, was durch die zusätzlichen Pfeile 13 veranschaulicht ist. Die zu den Kanälen 14 hin weisende Oberfläche des Filters, aus der das Wasser austritt, stellt die Wasserabströmoberfläche dar. In den vertikal verlaufenden Kanälen 14 der Filtervorrichtung läuft das Wasser in Richtung eines Bodens 15 der Filtervorrichtung und tritt durch einen Spalt 16 in ein als Strahlungsfiltervorrichtung 12 ausgebildetes weiteres Filterelement ein. Eine Außenwand 17 der Strahlungsfiltervorrichtung ist im Wesentlichen zylindrisch ausgebildet und dient der innenseitigen Begrenzung der Kanäle 14, wodurch diese mit ausgebildet werden. Aus der Strahlungsfiltervorrichtung 12 gelangt das Wasser dann über einen Strömungskanal 18 zum Wasserauslass 5.

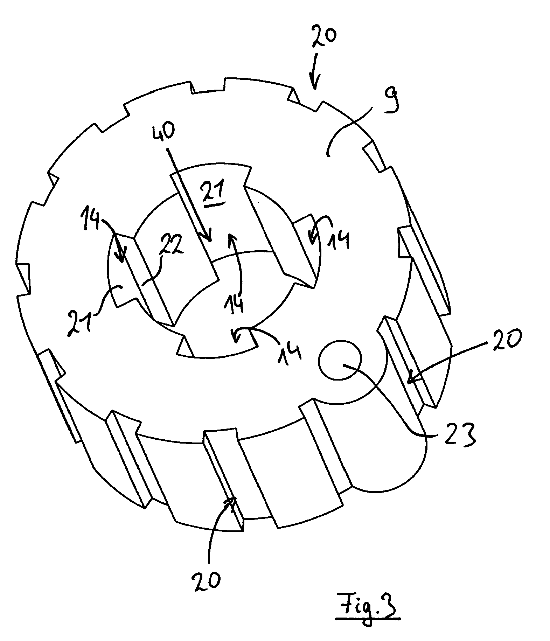

Insbesondere der Fig. 3 ist zu entnehmen, dass eine erfindungsgemäße Filtervorrichtung mit einem Filterelement 9 versehen ist, welches durch vier Vertiefungen in Kombination mit der Wandung 17 entstehende Kanäle 14 ausbildet. Die Grundform des Filterelements ist die eines Hohlzylinders mit einer zentralen Ausnehmung 40, auf dessen Innen- und Außenseite Strukturen aufgebracht sind. Das Filtermaterial selbst ersetzt somit die aus dem Stand der Technik bekannte Wandung mit Schlitzen, Perforationen oder dgl.. Die Filterelemente 9 stützen sich unmittelbar auf dem Gehäuse der Strahlungsfiltervorrichtung bzw. dessen Wandung 17 ab, wodurch die ganze Vorrichtung kompakter baut. Außenseitig sind Vertiefungen 20 auf das Filterelement aufgebracht, die eine Profilierung zur Erzeugung einer größeren Wasseranströmoberfläche darstellen. Die Wasserabströmoberfläche wird in diesem Fall durch die filterseitigen Wände 21 und 22 jedes Kanals 14 gebildet.

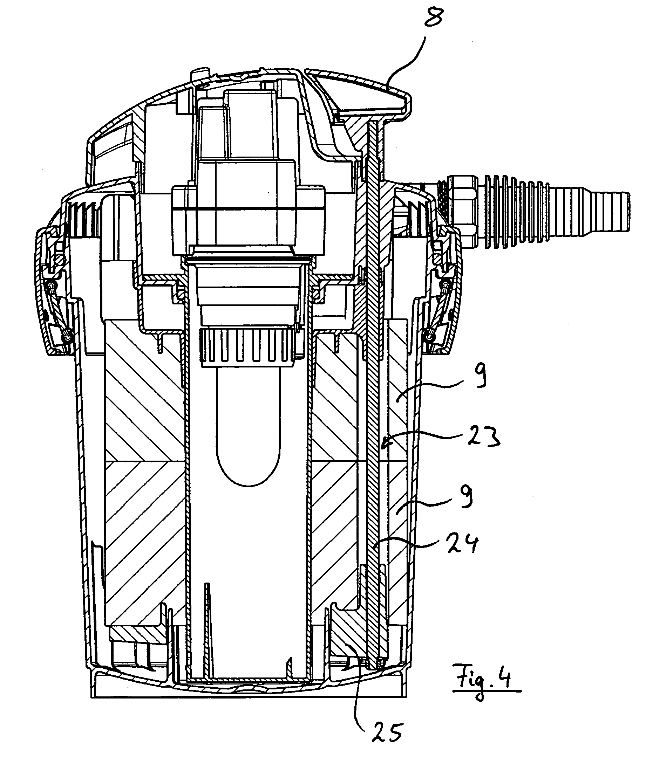

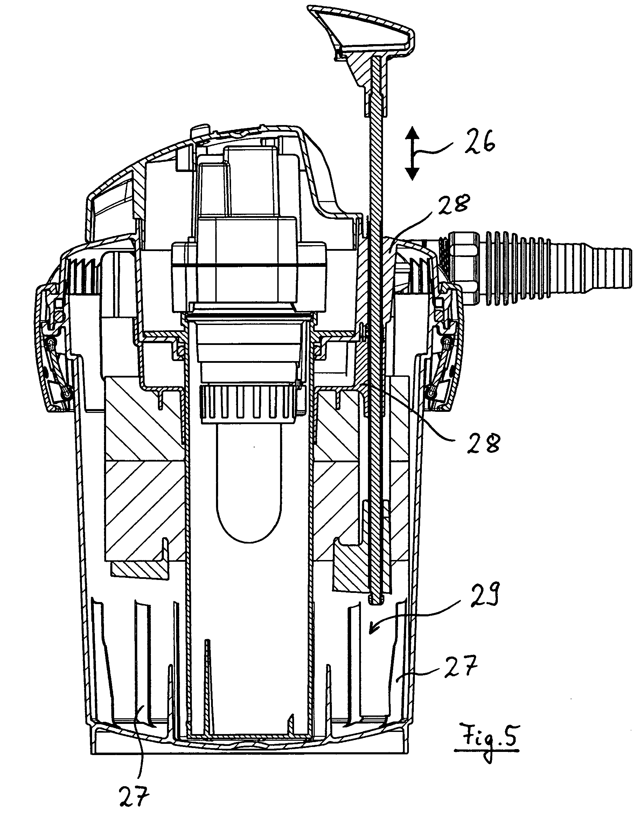

Eine kreisrunde Ausnehmung 23 dient der Aufnahme einer in Fig. 4 näher dargestellten Zugstange 24, die fest mit dem Griff 8 verbunden ist. Die Zugstange erstreckt sich komplett durch die weiten Filterelemente 9 und ist an ihrem unteren Ende an einer in der Draufsicht in etwa ringförmigen Druckplatte 25 befestigt. Durch Ziehen bzw. Drücken an dem Griff 8 in die durch den Doppelpfeil 26 (Fig. 5) gekennzeichneten Richtungen wird der Filter bzw. deren Filterelemente 9 komprimiert und dekomprimiert. Hierdurch werden Verschmutzungen aus dem Filter herausgedrückt und über den Wasserablauf (oder bei einem Umschalten von Wasserein- und -auslass über den Wasserzulauf) aus dem Filter entfernt. Vorteilhafterweise ist hierbei die Filtervorrichtung nach wie vor über eine Pumpe mit Druck beaufschlagt, d.h. die Reinigung kann im laufenden Betrieb erfolgen und dass die Schmutzpartikel des Filters aufweisende Wasser über den Wasserablass separat abgeführt werden.

Die Kanäle 14 können erfindungsgemäß so groß ausgebildet, dass sie im Kompressionsfall weiterhin eine Kanalisierung und eine Abfuhr des ausgepressten Wassers ermöglichen, so dass das Schmutzwasser sowohl über die Wasserzuström- und über die Wasserabströmoberfläche abfließen kann. Ein im Strömungsweg dem Filter nachgeordneter Bereich zwischen Eingang in den UVC-Strahlungsfilter und Filter 9 sowie der Freiraum 10 als im Strömungsweg vor dem Filter 9 befindlicher Bereich sind im Falle einer Komprimierung des Filters 9 über einen vom Filter 9 freigegebenen Bereich 29 direkt miteinander verbunden, so dass das Spülen der Filtervorrichtung einfacher erfolgt. Ebenfalls kann ein weiterer, über ein Ventil zuschaltbarer Schmutzwasserablass vorhanden sein, der für den Reinigungsfall verwendbar ist. Stege 27 dienen der Stabilisierung der Wand des Unterteils 7 und gleichzeitig der Führung des Filters. Die Führung der Druckstange erfolgt durch Anlageflächen 28, die in diesem Fall sowohl im Deckel 3 wie auch im Unterteil 7 angeordnet sind und sich ausschließlich oberhalb der Druckplatte 25 befinden. Durch Abnahme des Deckels 3 kann gleichzeitig der UVC-Strahlungsfilter entnommen werden. Die Vorrichtung ist trotz ihrer Kompaktheit leicht zu warten.

## Patentansprüche

1. Filtervorrichtung für das Wasser von Gartenteichen oder Aquarien mit einem Gehäuse (2), einem Wassereinlass (4), einem Wasserauslass (5) und wenigstens einem mittels einer Betätigungsvorrichtung im Gehäuse (2) komprimierbaren Filter (9) im Wesentlichen hohlzylindrischer Grundform mit zentraler Ausnehmung (40), welcher im Strömungsweg zwischen Wasserein- und Wasserauslass (4, 5) angeordnet ist und zumindest jeweils eine Wasseranström- und eine Wasserabströmoberfläche aufweist, wobei die Wasserabströmoberfläche wenigstens einen Kanal (14) in axialer Richtung längs der Außenseite eines in Umfangsrichtung geschlossenen Wandungsteils (17) innerhalb der zentralen Ausnehmung ausbildet, in dem das Wasser in Richtung des Wasserauslasses (5) transportierbar ist, **dadurch gekennzeichnet, dass** an der Wasserabströmoberfläche eine Mehrzahl von Kanälen (14) ausgebildet ist, zwischen denen der Filter (9) an dem Wandungsteil (17) anliegt.

2. Filtervorrichtung nach Anspruch 1, **dadurch gekennzeichnet, dass** die Kanäle (14) im Querschnitt hinterschnittene Seiten (22) aufweisen.

3. Filtervorrichtung nach Anspruch 1 oder 2, **dadurch gekennzeichnet, dass** der Filter (9) durch seine Komprimierung zumindest teilweise aus dem Strömungsweg entfernbar ist, dergestalt, dass ein im Strömungsweg vor dem unkomprimierten Filter (9) befindlicher Bereich (10) und ein im Strömungsweg nach dem unkomprimierten Filter befindlicher Bereich über den vom komprimierten Filter (9) freigegebenen Bereich (29) miteinander verbunden sind.

4. Filtervorrichtung nach einem der vorherigen Ansprüche, **dadurch gekennzeichnet, dass** auf der Wasseranströmoberfläche eine diese Oberfläche vergrößernde Profilierung vorhanden ist.

5. Filtervorrichtung nach einem der vorherigen Ansprüche, **dadurch gekennzeichnet, dass** die Kanäle (14) durch eine an dem Filter (9) anliegende Wand (17) mit ausgebildet werden.

6. Filtervorrichtung nach einem der vorherigen Ansprüche, **dadurch gekennzeichnet, dass** die Kanäle (14) einen Strömungsweg hin zu einer bodenseitigen Einströmöffnung (16) eines zentral angeordneten und von dem Filter (9) umgrenzten weiteren Filterelements führen.

7. Filtervorrichtung nach einem der vorherigen Ansprüche, **dadurch gekennzeichnet, dass** der Filter (9) eine Ausnehmung (23) aufweist, in der ein Zugmittel (24) der Betätigungsvorrichtung verläuft.

## Claims

1. Filter device for the water from garden ponds or aquariums, comprising a housing (2), a water inlet (4), a water outlet (5) and at least one filter (9) that can be compressed by an actuation device in the housing (2), has a substantially hollow-cylindrical basic shape having a central recess (40), is arranged in the flow path between the water inlet and the water outlet (4, 5) and has at least one water inflow surface and one water outflow surface, the water outflow surface forming, within the central recess, at least one channel (14) in the axial direction along the outside of a wall part (17) that is closed in the peripheral direction, in which channel the water can be transported towards the water outlet (5), **characterised in that** a plurality of channels (14) are formed on the water outflow surface, between which channels the filter (9) rests on the wall part (17).

2. Filter device according to claim 1, **characterised in that** the channels (14) have sides (22) that are undercut in cross section.

3. Filter device according to either claim 1 or claim 2, **characterised in that** the filter (9) can be removed at least in part from the flow path by being compressed such that a region (10) that is located upstream of the uncompressed filter (9) in the flow path and a region that is located downstream of the uncompressed filter in the flow path are interconnected by the region (29) that is released when the filter (9) is compressed.

4. Filter device according to any of the preceding claims, **characterised in that** a profiled section that increases the water inflow surface is present on said surface.

5. Filter device according to any of the preceding claims, **characterised in that** the channels (14) are formed by a wall (17) resting on the filter (9).

6. Filter device according to any of the preceding claims, **characterised in that** the channels (14) guide a flow path towards a bottom-side inflow opening (16) in a centrally arranged additional filter element that is surrounded by the filter (9).

7. Filter device according to any of the preceding claims, **characterised in that** the filter (9) has a recess (23) into which a traction means (24) of the actuation device extends.

## Revendications

1. Dispositif de filtration de l'eau de pièces d'eau de jardin ou d'aquarium, ledit dispositif comprenant un boîtier (2), une entrée d'eau (4), une sortie d'eau (5) et au moins un filtre (9) qui est comprimable au moyen d'un dispositif d'actionnement situé dans le boîtier (2), qui est sensiblement en forme de cylindre creux pourvu d'un évidement central (40), qui est disposé dans le trajet d'écoulement entre l'entrée d'eau et la sortie d'eau (4, 5) et qui comporte au moins une surface d'amenée d'eau et une surface d'évacuation d'eau, la surface d'évacuation d'eau formant à l'intérieur de l'évidement central, dans la direction axiale le long du côté extérieur d'un élément de paroi (17) fermé dans la direction circonférentielle, au moins un canal (14) dans lequel l'eau peut être transportée en direction de la sortie d'eau (5), **caractérisé en ce qu'**au niveau de la surface d'évacuation d'eau est formée une pluralité de canaux (14) entre lesquels le filtre (9) est en appui sur l'élément de paroi (17).

2. Dispositif de filtration selon la revendication 1, **caractérisé en ce que** les canaux (14) ont en coupe transversale des côtés en contre-dépouille (22).

3. Dispositif de filtration selon la revendication 1 ou 2, **caractérisé en ce que** le filtre (9) peut être retiré, par compression de celui-ci, au moins partiellement du trajet d'écoulement de telle sorte qu'une région (10), située dans le trajet d'écoulement en amont du filtre (9) non comprimé, et une région, située dans le trajet d'écoulement en aval du filtre non comprimé, sont reliées entre elles par la région (29) libérée par le filtre comprimé.

4. Dispositif de filtration selon l'une des revendications précédentes, **caractérisé en ce que** sur la surface d'amenée d'eau se trouve un profilage qui agrandit cette surface.

5. Dispositif de filtration selon l'une des revendications précédentes, **caractérisé en ce que** les canaux (14) sont formés par une paroi (17) en appui sur le filtre (9).

6. Dispositif de filtration selon l'une des revendications précédentes, **caractérisé en ce que** les canaux (14) forment un trajet d'écoulement allant jusqu'à une ouverture d'entrée côté fond (16) d'un autre élément de filtre disposé au central et délimité par le filtre (9).

7. Dispositif de filtration selon l'une des revendications précédentes, **caractérisé en ce que** le filtre (9) comporte un évidement (23) dans lequel s'étend un moyen de traction (24) du dispositif d'actionnement.
